(19) Europäisches Patentamt
European Patent Office
Office européen des brevets

(11) **EP 2 774 777 B1**

(12) **FASCICULE DE BREVET EUROPEEN**

(45) Date de publication et mention
de la délivrance du brevet:
**30.11.2016  Bulletin 2016/48**

(51) Int Cl.:
***B60B 1/04*** *(2006.01)*      ***B60B 7/00*** *(2006.01)*
***B60B 7/04*** *(2006.01)*      ***B60B 21/02*** *(2006.01)*
***B60B 21/06*** *(2006.01)*      ***B60B 7/06*** *(2006.01)*
***B60B 1/00*** *(2006.01)*      ***B60B 5/02*** *(2006.01)*

(21) Numéro de dépôt: **14000699.0**

(22) Date de dépôt: **27.02.2014**

(54) **Roue de cycle et son procédé de fabrication**

Rad eines Fahrrads, und sein Herstellungsverfahren

Cycle wheel and method for manufacturing same

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **08.03.2013  FR 1300534**

(43) Date de publication de la demande:
**10.09.2014  Bulletin 2014/37**

(73) Titulaire: **MAVIC S.A.S.**
**74370 Metz-Tessy (FR)**

(72) Inventeurs:
• **Righini, Claude**
**74290 Veyrier du Lac (FR)**
• **Feliciano, Antoine**
**74210 Doussard (FR)**

(74) Mandataire: **Rambaud, Pascal**
**Salomon S.A.S.**
**D.J.P.I.**
**74996 Annecy Cedex 9 (FR)**

(56) Documents cités:
FR-A1- 2 672 251     FR-A1- 2 701 899
FR-A1- 2 952 587     US-A1- 2010 253 132

**Description**

La présente invention concerne une roue de cycle, ainsi qu'un procédé de fabrication d'une telle roue correspondante aux préambules des revendications 1 et 17 et telle que divulguée dans le document FR 2 952 587.

Dans le domaine des cycles, notamment des bicyclettes de compétition, on connait des roues à rayons tendus équipées de jantes dites « aérodynamiques » qui réduisent la traînée des roues de la bicyclette et améliorent les performances d'un cycliste. Les jantes de ces roues sont aujourd'hui principalement réalisées en composite à base de carbone. Elles sont donc d'un prix de revient élevé, ce qui limite leur utilisation aux cycles haut de gamme ou de compétition. Les matériaux composites ne sont pas recyclables, ce qui est nuisible pour l'environnement. Leur masse volumique est relativement élevée, ce qui augmente la masse des roues et pénalise les performances du cycliste.

FR-A-2 344 411 divulgue une roue de bicyclette qui comprend une jante sur laquelle est rapporté un carénage en PVC, en forme de demi-fuseau et qui est pourvu de lumières à travers lesquelles passent les rayons de la roue. Le carénage est fixé sur la jante par des vis qui sont difficiles d'accès et susceptibles de se desserrer au cours de la durée de vie de la roue. Le carénage est relativement lourd, compte tenu de la masse volumique du PVC.

FR-A-2 702 707 décrit une jante composite à base de fibres de carbone et de résine, qui délimite un volume intérieur rempli avec une mousse structurelle en résine de synthèse, par exemple en polyuréthane. Cette jante n'est pas recyclable à cause de la présence du matériau composite. De plus, la mousse structurelle est prisonnière de la coque composite, ce qui empêche sa récupération en vue du recyclage. En outre, sa fabrication est relativement complexe.

C'est à tous ces inconvénients qu'entend plus particulièrement remédier l'invention en proposant une jante aérodynamique légère, recyclable, facile à fabriquer, peu coûteuse et qui résiste aux chocs.

A cet effet, l'invention a pour objet une roue de cycle, pourvue de moyens de réception d'un pneumatique, cette roue étant équipée d'un carénage rapporté sur la jante. Selon l'invention, le carénage est réalisé au moins en partie à partir de mousse de polypropylène expansé.

Les objectifs de l'invention sont atteints par la fourniture d'une jante pour roue de cycle comportant un anneau structurel pouvant recevoir un pneumatique et un carénage rapporté à l'intérieur de l'anneau structurel, ledit carénage étant réalisé au moins en partie dans un matériau dont la masse volumique (p) est inférieur à 120 kg/m³ et dont la déformation rémanente après déformation de 25% est inférieure à 14%.

Le carénage peut par exemple, être fabriqué à partir d'une mousse à base de polypropylène. Ce matériau est léger et recyclable. Il permet de faciliter la fabrication de la jante car il est obtenu simplement par moulage ou par usinage d'un bloc de matière, et son assemblage avec la jante est aisé, par déformation élastique. De plus ces mousses de polypropylène, possèdent un allongement élastique et plastique très intéressant en ayant de plus une très faible hystérèse plastique après avoir subi une déformation en compression importante de sorte que ces mousses sont capables de subir les petits chocs liées aux manipulations de la roue (transport, nettoyage, etc..) sans nécessiter une coque additionnelle de protection de surface qui rajouterai un surpoids trop important.

Selon des aspects avantageux mais non obligatoires de l'invention, une telle roue peut incorporer une ou plusieurs des caractéristiques suivantes, prises en toute combinaison techniquement admissible :

- Le matériau à base de polypropylène constitue, au moins partiellement, la surface externe du carénage.
- Le module d'élasticité de la mousse est supérieur à 5 MPa.
- L'allongement à la rupture de la mousse est supérieur à 10%.
- La résistance à la traction de la mousse est supérieure à 500 kPa.
- La résistance à la compression à 25% de la mousse est supérieure à 150 kPa.

Sur un échantillon de 10 mm d'épaisseur du matériau constituant le carénage, la déformation rémanente après la compression générée par une pénétration de 2,5 mm de profondeur d'un poinçon hémisphérique de 10 mm de diamètre est inférieure à 1,4 mm.

- Le polypropylène est de type copolymère polypropylène.
- En l'absence de contraintes mécaniques, le diamètre d'une surface externe du carénage, venant en contact avec un pont de la jante en configuration assemblée, est strictement supérieur au diamètre du pont, de préférence supérieur d'environ 0,5 mm, de préférence supérieur à 1 mm.
- Le carénage est constitué de deux parties assemblées entre elles, réalisées au moins en partie à partir de mousse de polypropylène expansé.
- La densité de la mousse des deux parties est différente.
- Le carénage comporte des évidements internes.
- Le carénage comporte des trous de passage de rayons de la roue, réalisés notamment par poinçonnage à chaud ou par perçage.
- Le carénage est amovible par déformation élastique.
- Le carénage comporte au moins un renfort structurel.

L'invention concerne également un procédé de fabrication d'une telle roue, comprenant des étapes dans lesquelles :

a) on fabrique séparément la jante et le carénage,
b) le carénage est assemblé avec la jante en le déformant élastiquement.

L'invention sera mieux comprise et d'autres avantages de celle-ci apparaîtront plus clairement à la lumière de la description qui va suivre de plusieurs modes de réalisation d'une roue conforme à son principe et d'une méthode de fabrication d'une telle roue, donnée uniquement à titre d'exemple et faite en référence aux dessins annexés dans lesquels :

- la figure 1 est une vue en perspective d'une roue conforme à l'invention,
- les figures 2, 3 et 4 sont des coupes radiales partielles, à plus grande échelle, dans les plans II, III et IV à la figure 1,
- la figure 5 est une coupe partielle, selon le plan P du détail V à la figure 1,
- la figure 6 est une vue latérale partielle du détail V à la figure 1, en cours d'assemblage ou de démontage de la roue,
- les figures 7 et 8 sont des coupes analogues à la figure 2 pour un deuxième et troisième modes de réalisation de l'invention,
- la figure 9 est un graphique montrant le comportement à la compression d'un échantillon cubique de mousse en Polypropylène analogue au matériau utilisé dans la roue de la figure 1,
- la figure 10 est un tableau qui récapitule des caractéristiques mécaniques pour différents matériaux pouvant être utilisés pour réaliser le carénage,
- la figure 11, est une vue schématique d'un test de marquage permettant d'évaluer la déformation rémanente d'un matériau.

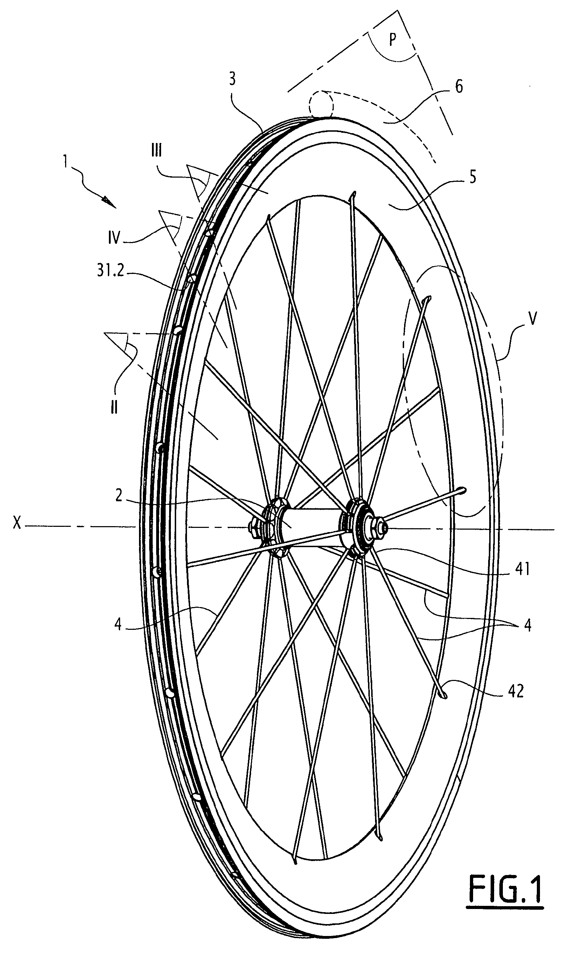

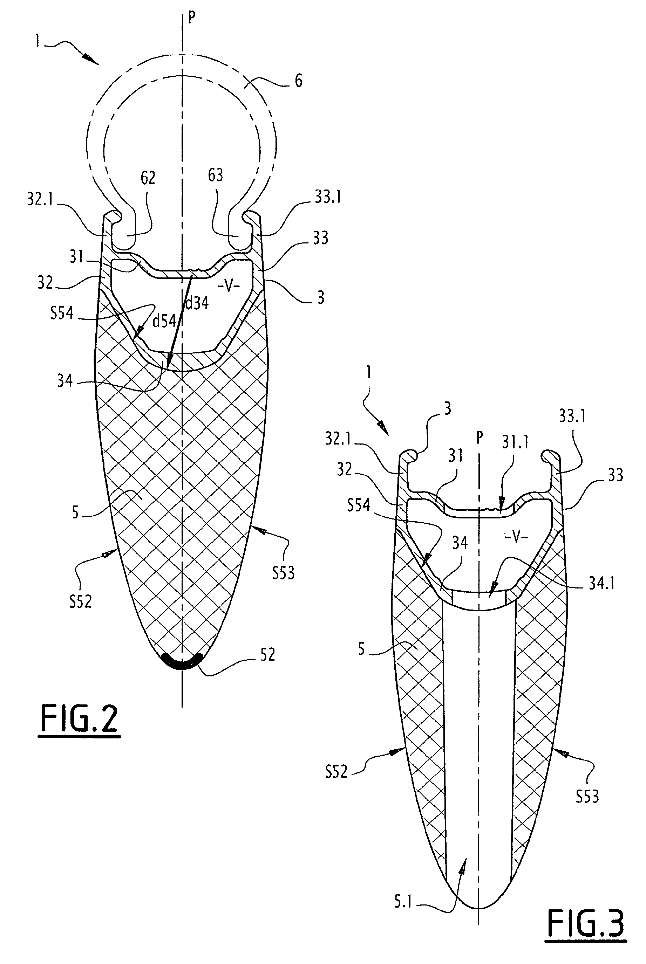

La roue 1 représentée aux figures 1 à 6 est destinée à être équipée d'un pneumatique 6 représenté partiellement et en traits mixtes aux figures 1 et 2 uniquement.
La roue 1 comprend une jante 3 en aluminium et un moyeu 2 destiné à être fixé sur une partie d'une bicyclette, dans l'exemple sur la fourche avant, puisque la roue 1 est une roue avant de bicyclette. L'invention s'applique également à une roue arrière de bicyclette équipée d'une cassette de pignons.
La roue 1 est mobile en rotation, autour d'un axe X, par rapport à la fourche de la bicyclette.
Des rayons 4 sont tendus entre la jante 3 et le moyeu 2.
Un carénage 5 appartient également à la roue 1 et est constitué d'un élément annulaire fuselé réalisé au moins en partie à partir d'un matériau à base de polypropylène expansé, par exemple le matériau commercialisé sous la référence ARPRO (marque déposée) par la société JSP, plus particulièrement les références ARPRO 60, ARPRO 80 et ARPRO 100 où 60, 80 et 100 est la densité p, c'est-à-dire la masse volumique, exprimée

en kg/m$^3$. La densité du matériau constituant le carénage 5 est inférieure à 120 kg/m$^3$ soit au moins 7,5 fois inférieure au polypropylène de base, ce qui permet d'obtenir une roue 1 légère.
L'ARPRO est un copolymère polypropylène contenant éventuellement des éléments minéraux et organiques, par exemple des pigments pour colorer le matériau. Le polypropylène est expansé de préférence avec du dioxyde de carbone ou de l'air.
Chaque rayon 4 est accroché par une première extrémité 41 sur le moyeu 2 et sa deuxième extrémité filetée 42 comporte des moyens de fixation à la jante 3, tels qu'un écrou passant au travers d'un trou 34.1 réalisé dans le pont inférieur 34 de la jante aluminium et prenant appui sur l'intérieur de cette dernière, l'ajustement de la tension des rayons et le dévoilage de la roue étant assuré par le vissage de ce dernier.
Comme le montrent les figures 2 à 4, la section radiale de la jante 3 est en forme de caisson creux, autrement dit en forme de « U ». Par section radiale, on entend une section dans un plan tel que les plans II, III et IV à la figure 1, c'est-à-dire une section qui passe par l'axe X et qui est orientée selon une direction radiale par rapport à l'axe X.
La section radiale de la jante 3 comprend une paroi transversale 31 qui relie les deux branches verticales du « U », deux flancs latéraux 32 et 33 et un pont 34 de forme arrondie.
Le pont 34 relie entre eux les flancs 32 et 33 et forme la partie courbe de la section en « U ». Le côté convexe du pont 34 est tourné vers l'axe de rotation X.
Le pont 34 est situé du côté de l'axe de rotation X et la paroi transversale 31 est située du côté du pneumatique 6. La jante 3 délimite ainsi un volume intérieur V.
Du côté opposé au pont 31, les flancs 32 et 33 sont pourvus chacun d'un crochet 32.1 et 33.1 en forme de L, prévu pour fixer des tringles 62 et 63 du pneumatique 6. Au sens de la présente demande, un pneumatique peut être un pneumatique avec tringles ou bourrelets, destiné à coopérer avec des reliefs correspondant d'une jante, ou un pneumatique tubulaire parfois dénommé « boyau » et collé sur la jante. Les crochets 32.1 et 33.1 constituent des moyens de réception du pneumatique 6. En variante, la jante 3 est pourvue d'autres moyens de réception d'un pneumatique 6, par exemple dans le cas des pneumatiques de type « boyau ».
On note P, un plan médian de la roue 1, perpendiculaire à l'axe X. Le plan médian P passe entre les flancs 32 et 33 et entre les crochets 32.1 et 33.1, à égale distance de ceux-ci. Ainsi, les flancs 32 et 33 sont situés de part et d'autre du plan médian P.
Le carénage 5 comporte une surface externe S54, tournée à l'opposé de l'axe de rotation X, en contact avec le pont 34 de la jante 3. La surface externe S54 est concave et a une géométrie complémentaire de celle du pont 34.
La surface externe du carénage est presque entièrement constituée par le matériau à base de polypropylène expansé; sans qu'il soit nécessaire de le recouvrir d'une peau extérieur faite d'un matériau plus rigide.

La surface externe S54 est prolongée vers l'axe de rotation X par deux surfaces latérales S52 et S53 du carénage 5, qui se rejoignent au niveau d'un sommet S du carénage 5, de forme annulaire. Les surfaces latérales du carénage S52 et S53 sont dans le prolongement des flancs 32 et 33 de la jante 3, de façon à définir un ensemble jante et carénage au contour lissé et parfaitement aérodynamique.

Comme visible à la figure 3, le pont 34 et la paroi transversale 31 de la jante 3 comportent chacun des trous 34.1 et 31.1 de passage des rayons 4. Ces trous 34.1 et 31.1 sont prolongés au travers du carénage 5 par un trou 5.1. Les trous 31.1, 34.1 et 5.1 permettent de fixer les deuxièmes extrémités filetées 42 des rayons 4 à la jante 3 par l'intermédiaire des écrous de rayons.

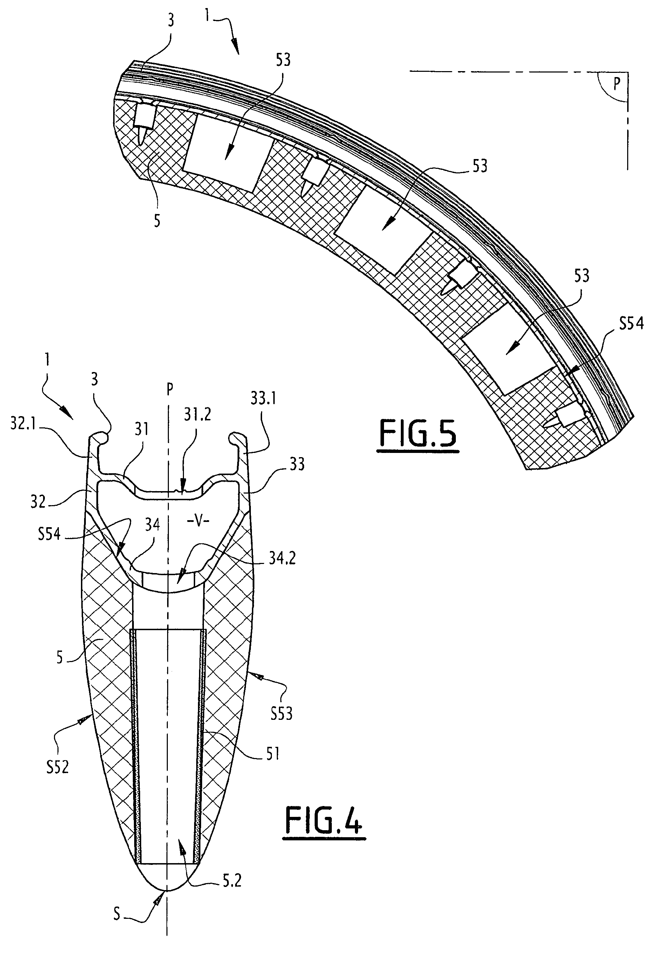

Un trou de valve 31.2, 34.2 et 5.2 visible à la figure 4 est réalisé au travers de la paroi transversale 31, du pont 34 et du carénage 5. Un tube 51 en thermoplastique est collé dans le trou de valve 5.2, à l'intérieur du carénage 5 et permet de guider la valve de la chambre en évitant aussi d'endommager le carénage si l'utilisateur venait à forcer exagérément sur la valve lors du gonflage. Lorsque le pneumatique 6 est monté sur la jante 3, la valve du pneumatique est insérée dans le trou de valve 31.2, 34.2 et 5.2 et dépasse à l'extérieur de la jante 3 et du carénage 5.

Un renfort structurel 52 annulaire, représenté uniquement à la figure 2 et réalisé par exemple à partir d'un profil thermoplastique cintré, est disposé au niveau du sommet S du carénage 5 pour renforcer le carénage dans cette zone afin d'éviter l'endommagement du carénage si le vélo venait à être parqué, suspendu verticalement par un crochet prenant appui sur le sommet du carénage pour le ranger.

En variante non représentée, le carénage 5 comporte au moins un renfort structurel rigide qui remplace le renfort 52 ou vient complément. Par exemple, un squelette thermoplastique vient renforcer structurellement la mousse du carénage, ce squelette peut être surmoulé dans la mousse polypropylène.

Comme visible à la figure 5, le carénage 5 comporte des évidements internes 53 qui débouchent au niveau de la surface externe S54. Les évidements 53 permettent de réduire la masse du carénage 5.

Lors de la fabrication de la roue 1, on fabrique d'abord séparément la jante 3 et le carénage 5.

La jante 3 est obtenue par exemple par profilage d'aluminium. Les profilés sont ensuite cintrés selon une forme hélicoïdale. Ainsi, en tronçonnant les profilés cintrés sur deux parties de l'hélice sensiblement alignées, il est possible de réaliser une ébauche ouverte de jante en forme de tronçon d'hélice sur 360°. La jante 3 est ensuite constituée à partir de cette ébauche, en mettant bout à bout les extrémités de l'ébauche tronçonnée et en les assemblant, par exemple par soudage ou avec des éléments de fixation rapportés.

Le carénage 5 est obtenu par exemple par moulage. Eventuellement, le moule peut être poreux pour obtenir un aspect de surface plus lisse. Les évidements 53 et les trous 5.1 et 5.2 peuvent être obtenus lors du moulage, ou postérieurement, par exemple par perçage ou par poinçonnage à chaud. En variante, le carénage 5 est usiné dans la masse.

Puis, le carénage 5 est assemblé avec la jante 3 en le déformant légèrement élastiquement pour permettre la mise en place de la surface externe S54 concave du carénage 5 contre le pont 34 de la jante 3. Il est donc nécessaire que le matériau qui constitue le carénage 5 soit suffisamment souple et élastique pour permettre cette déformation.

En variante la jante peut-être manchonnée lors de l'opération finale en insérant avant manchonnage le carénage à l'intérieur de la jante, le manchonnage viendra alors au final fretter le carénage à l'intérieur de la jante et il ne sera pas nécessaire de déformer le carénage pour l'introduire dans la jante.

En l'absence de contraintes mécaniques, par exemple avant l'assemblage, le diamètre d54 de la surface externe S54, est légèrement supérieur au diamètre d34 du pont 34, de préférence supérieur d'environ 1 mm. Plus précisément, dans chaque plan de section perpendiculaire à l'axe X et entre les surfaces latérales S52 et S54, le diamètre d54 de la surface externe S54, mesuré selon une direction radiale, est légèrement supérieur au diamètre d34 du pont 34, mesuré dans le même plan de section, perpendiculairement à l'axe X. En particulier, dans le plan médian P, le diamètre d54 de la surface externe S54 est légèrement supérieur au diamètre d34 du pont 34.

Ainsi, le carénage 5 est assemblé en force avec la jante 3. Une fois le carénage 5 positionné contre la jante 3, les efforts de pression exercés par le carénage 5 sur la jante 3 maintiennent l'assemblage en place.

On peut remarquer que lors du rayonnage de la roue, la tension des rayons ainsi que la pression du pneumatique viennent réduire de plusieurs dixièmes de millimètres le diamètre de la jante de part l'effort de compression induit dans la jante 3, ce phénomène ne fait qu'augmenter le frettage du carénage 5 dans la jante 3 assurant ainsi un très bon maintien.

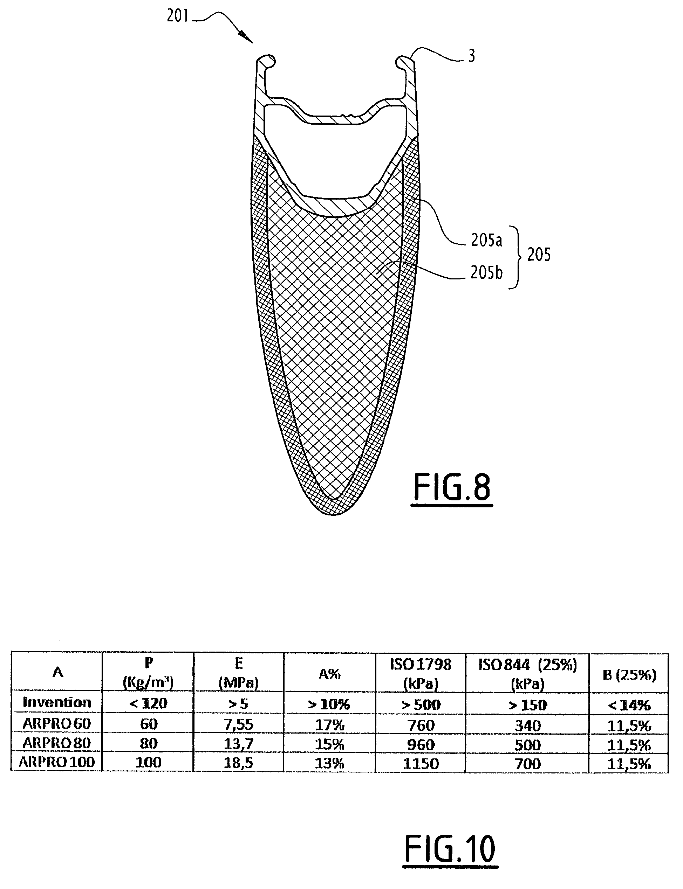

Le tableau de la figure 10 indique des paramètres caractérisant l'ARPRO 60, l'ARPRO 80 et l'ARPRO 100.

Le module d'élasticité E du carénage 5 est supérieur à 5 MPa, ce lui confère une bonne rigidité garantissant une excellente tenue de l'assemblage, tout en permettant le démontage du carénage 5. Par exemple, pour l'ARPRO 60, l'ARPRO 80 et l'ARPRO 100, le module d'élasticité E du carénage 5 est respectivement égal à 7,6 MPa, 13,7 MPa et 18,5 MPa.

A titre de comparaison les mousses Polyuréthane ne conviennent pas pour cette application de carénage car pour une masse volumique comparable de 60 Kg/m3 le module n'est que d'environ 0,1 MPa ne conférant pas une raideur suffisante au carénage pour qu'il soit fonctionnellement acceptable.

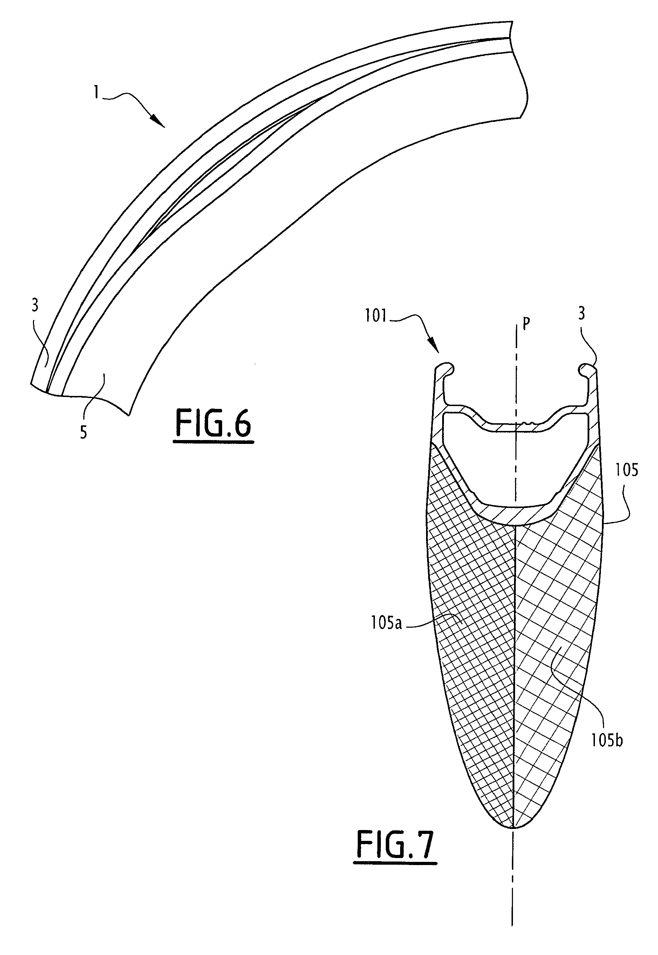

Comme représenté à la figure 6, le carénage 5 est suffisamment souple pour pouvoir être déformé en vue de son retrait. Cela permet de remplacer le carénage 5, par exemple s'il est endommagé. De plus, cela permet de recycler la roue 1 en séparant les éléments qui la constituent. En particulier, le carénage 5 est réalisé à partir d'un matériau recyclable, c'est-à-dire qu'il est possible de réintroduire, dans le cycle de production du carénage 5, la mousse de polypropylène expansé usagée lorsque le carénage 5 est arrivé en fin de vie.

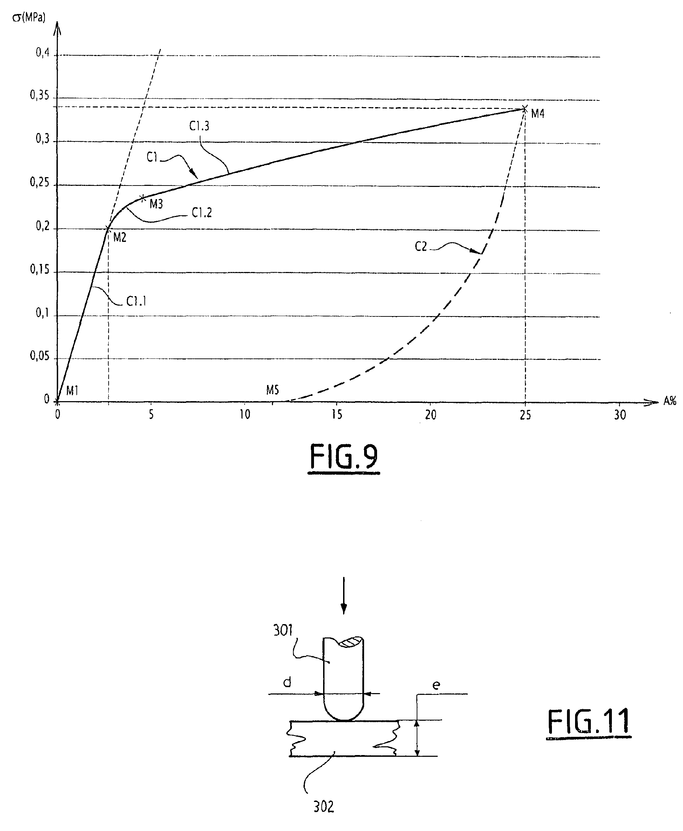

Le graphique de la figure 9 montre le comportement en compression à 25% d'un échantillon du matériau constituant le carénage 5, à savoir la mousse de polypropylène ARPRO 60. L'axe des abscisses indique la valeur absolue de l'allongement A, qui est exprimé en %, et l'axe des ordonnées indique la contrainte de compression σ, exprimée en MPa.

L'allongement A (%) est défini par la relation

$$A = 100.\frac{L - L0}{L0}\ \text{, avec :}$$

- L0 la longueur initiale de l'échantillon, avant le début de l'essai de traction,
- L la longueur de l'échantillon à l'instant considéré.

Une première courbe C1, représentée en trait continu, illustre le comportement du matériau lors de sa compression, et s'étend entre un point M1 et un point M4.

Une partie rectiligne C1.1 de la courbe est définie entre le point M1, situé à l'origine, et un point M2. Entre les points M1 et M2, au fur et à mesure que la contrainte de compression σ augmente, l'allongement A augmente proportionnellement. De manière classique, la partie C1.1 correspond à une déformation élastique du matériau et sa pente permet de définir le module d'Young E du matériau. Au point M2, l'allongement A est environ égal à 2,6% et la contrainte de compression σ est environ égale à 0,2 MPa.

Le module d'élasticité est défini par la loi de Hooke :

$$\sigma = E.\varepsilon\ \text{ soit } E = \sigma\,/\,\varepsilon$$

ou σ représente la contrainte de traction ou de compression et E la déformation ou l'allongement décrit ci-dessus, on peut recalculer ainsi le module d'Young du matériau ARPRO 60 en divisant 0,2 MPa par 0,026 soit environ 7,6 MPa.

Une partie transitoire C1.2 de la courbe C1 s'étend entre le point M2 et un point M3. La pente de la courbe C1 diminue le long de la partie transitoire C1.2.

Une troisième partie C1.3 de la courbe C1 s'étend entre les points M3 et M4. La troisième partie C1.3 est sensiblement linéaire et sa pente est inférieure à celle de la première partie C1.1. Au niveau du point M4, l'allongement A est égal à 25%, autrement dit, le matériau a été compressé de 25% par rapport à ses dimensions initiales. La contrainte de compression σ est égale à environ 0,34 MPa.

Une deuxième courbe C2, représentée en traits mixtes, s'étend entre le point M4 et un point M5 et représente le comportement du matériau lorsque la contrainte de compression σ diminue, après avoir été comprimé selon la courbe C1 et maintenu comprimé pendant 22h à une température de 23°C. Entre les points M4 et M5, l'allongement A diminue, c'est-à-dire que les dimensions de l'échantillon augmentent.

Au point M5, la contrainte de compression σ est égale à zéro et l'allongement A est égal à environ 11,5 %. Autrement dit, une fois la contrainte de compression σ relâchée, les dimensions de l'échantillon ont diminué de 11,5%.

Dans l'exemple représenté à la figure 9, pour l'ARPRO 60, la déformation rémanente à 25% de compression, notée B, après dépassement de la limite d'élasticité, est égale à 11,5%. C'est également le cas pour l'ARPRO 80 et l'ARPRO 100. Dans le cadre de l'invention, la déformation rémanente à 25% de compression, est de préférence inférieure à 14%. De cette manière, la mousse du carénage peut supporter des charges locales ou des chocs modérés réalisés par exemple lors de la manipulation des roues pour les ranger dans un coffre de voiture ou lors de chutes accidentelles du cycliste, sans que la roue soit impactée visuellement.

L'allongement à la rupture du carénage 5, noté de manière classique A%, est supérieur à 10%, ce qui lui évite d'être marqué lors de sa manipulation. De cette manière, lorsque la roue 1 est manipulée, par exemple lors de son transport, elle n'est pas marquée par les coups et les petits chocs. L'allongement à la rupture A% est donné par la relation $A\% = 100.\dfrac{Lu - L0}{L0}$ ,

avec :

- L0 la longueur initiale de l'échantillon, avant le début de l'essai de traction,
- Lu la longueur de l'échantillon lors de la rupture.

L'allongement à la rupture A% de l'ARPRO 60, l'ARPRO 80 et l'ARPRO 100 est égal à 11,5%.

A titre de comparaison, les mousses en Polymétacrylimide très employées dans les structures composites et connues sous la marque commerciale Rohacell ont un excellent module et une faible densité mais possèdent, à densité équivalente, un allongement à la rupture en traction de seulement 3% et une déformation rémanente à 25% de compression de plus de 21%, les rendant très sensibles aux petits chocs, de sorte que le carénage serait très rapidement cassé ou cabossé par tous les petits impacts.

De même les mousses de Polystyrène expansé à densité comparable ont un allongement maximal en traction de l'ordre de 4% et une déformation rémanente à 25% de compression de 20%, ces mousses sont en outre très sensible chimiquement aux solvants.

Comme montrée à la figure 10, la résistance à la traction de l'ARPRO 60, de l'ARPRO 80 et de l'ARPRO 100, définie par la norme ISO 1798, est respectivement égale à 760 kPa, 960 kPa et 1150 kPa. Dans le cadre de l'invention, la résistance à la traction du carénage 5, définie par la norme ISO 1798, est supérieure à 500 kPa.

La résistance à la compression de l'ARPRO 60, de l'ARPRO 80 et de l'ARPRO 100, définie par la norme ISO 844, est respectivement égale à 340 kPa, 500 kPa et 700 kPa sous une déformation de compression égale à 25%. Dans le cadre de l'invention, la résistance à la compression sous une déformation de 25% du carénage 5, définie par la norme ISO 844, est supérieure à 150 kPa.

La résistance à la traction et à la compression garantit une bonne résistance mécanique du carénage 5.

Le matériau constituant le carénage 5 est insensible aux solvants tels que l'essence et le naphta lourd (white spirit). Ainsi, on peut nettoyer les traces de graisse qui apparaissent lors de l'utilisation du cycle ou de la lubrification de la chaine de transmission, sans endommager le carénage 5.

Le matériau constituant le carénage 5 est un isolant phonique, ce qui réduit les bruits potentiels.

Eventuellement, le carénage 5 peut être vernis ou peint afin d'augmenter sa dureté en surface ou pour le décorer.

Les figures 7 et 8 montrent un deuxième et troisième mode de réalisation de l'invention dans lesquels les éléments analogues à ceux de la roue 1 des figures 1 à 6 portent les mêmes références.

Dans la suite, on ne décrit pas en détail les éléments analogues à ceux des figures 1 à 6.

La figure 7 montre une roue 101 qui comprend une jante 3 analogue à la jante 3 des figures 1 à 6. La roue 101 comprend un carénage 105 constitué de deux parties 105a et 105b qui, une fois assemblées entre elles, ont la même géométrie que le carénage 5 de la roue 1. Les parties 105a et 105b sont symétriques et sont en contact l'une avec l'autre au niveau du plan P. Les parties 105a et 105b sont assemblées entre elles par collage. Les parties 105a et 105b sont réalisées à partir du même matériau.

En variante non représentée, les parties 105a et 105b peuvent être assemblées par coopération de formes, par exemple par un dispositif de tenon et mortaise.

La figure 8 montre une roue 201 qui comprend une jante 3 analogue à la jante 3 des figures 1 à 7. La roue 201 comprend un carénage 205 constitué de deux parties 205a et 205b qui, une fois assemblées entre elles, ont la même géométrie que le carénage 5 de la roue 1. La partie 205a forme une coque extérieure dont la section radiale est en forme de « U ». La partie 205b forme un noyau disposé à l'intérieur de la partie 205a.

La coque 205a est réalisée à partir d'un matériau présentant une résistance mécanique supérieure à celle du noyau 205b. Il est ainsi possible d'optimiser la résistance mécanique et la masse du carénage 205 en mettant en oeuvre un carénage à bi-densité.

De manière facultative, la surface externe S54 du carénage 5 peut être collée à la jante 3.

Eventuellement, la mousse de polypropylène qui constitue le carénage 5 peut être mélangée avec d'autres matériaux. Dans ce cas, le carénage 5 est réalisé au moins en partie à partir d'une mousse à base de polypropylène.

D'autres matériaux que le polypropylène expansé pourront être utilisés dans le cadre de l'invention à condition qu'ils présentent une densité inférieure à 120 kg/m$^2$ et une déformation rémanente en compression faible.

Afin d'évaluer la déformation rémanente de tels matériaux, on choisit de les soumettre à un test de marquage à l'aide d'un poinçon. La figure 10 décrit schématiquement ce test de marquage.

Un poinçon 301 dont l'extrémité a une surface hémisphérique de diamètre d = 10 mm est monté sur un tractiomètre (non représenté). Un échantillon 302 d'épaisseur e = 10 mm est placé sous le poinçon. La superficie de la surface frontale de l'échantillon est supérieure à 200 mm$^2$. On applique sur l'échantillon à l'aide du poinçon, un effort tel que l'épaisseur de l'échantillon diminue de 25%. Dans ce cas, on descend dans un premier temps le poinçon

D'autres matériaux que le polypropylène expansé pourront être utilisés dans le cadre de l'invention à condition qu'ils présentent une densité inférieure à 120 kg/m$^2$ et une déformation rémanente en compression faible.

Afin d'évaluer la déformation rémanente de tels matériaux, on choisit de les soumettre à un test de marquage à l'aide d'un poinçon. La figure 10 décrit schématiquement ce test de marquage.

Un poinçon 301 dont l'extrémité a une surface hémisphérique de diamètre d = 10 mm est monté sur un tractiomètre (non représenté). Un échantillon 302 d'épaisseur e = 10 mm est placé sous le poinçon. La superficie de la surface frontale de l'échantillon est supérieure à 200 mm$^2$. On applique sur l'échantillon à l'aide du poinçon, un effort tel que l'épaisseur de l'échantillon diminue de 25%. Dans ce cas, on descend dans un premier temps le poinçon jusqu'à ce qu'il affleure la surface de l'échantillon. Il s'agit de la position de référence du poinçon. Dans un deuxième temps on descend le poinçon d'une hauteur de 2,5 mm. La force nécessaire à une pénétration de 2,5 mm du poinçon dans l'échantillon est consignée. La valeur de cette force donne une indication sur la rigidité du matériau. De préférence, on choisira des matériaux pour lesquels une force d'au moins 20 N est nécessaire pour une pénétration de 2,5 mm du poinçon dans l'échantillon.

Dans un troisième temps, on relâche l'effort appliqué par le poinçon en remontant progressivement celui-ci. Pendant la remontée du poinçon, on surveille précisément l'effort appliqué sur l'échantillon. Lorsque cet effort est nul, on consigne la position du poinçon. Cette position correspond à la déformation rémanente après compression de 25%.

Les matériaux choisis pour réaliser le carénage selon l'invention devront avoir une déformation rémanente à l'issue de ce test inférieure à 1,4 mm, c'est-à-dire 14% de l'épaisseur initiale. Un carénage réalisé à partir d'un tel matériau est peu sensible aux petits chocs. D'autre part, pour ne pas alourdir la roue on n'utilisera pas de matériau dont la masse volumique est supérieure à 120 kg/m$^3$.

Dans le cas où le matériau à évaluer par le test de marquage se présente sous la forme de feuille dont l'épaisseur est inférieure à 10 mm, on en assemblera plusieurs feuilles jusqu'à obtenir un échantillon d'épaisseur supérieure à 10 mm.

Dans le cadre de l'invention, les différents modes de réalisation décrits peuvent être combinés entre eux, au moins partiellement.

## Revendications

1. Roue (1 ; 101 ; 201) de cycle, pourvue de moyens (32.1, 33.1) de réception d'un pneumatique (6), cette roue (1) étant équipée d'un carénage (5 ; 105 ; 205) rapporté sur la jante (3), **caractérisée en ce que** le carénage (5 ; 105 ; 205) est réalisé au moins en partie à partir d'un matériau dont la masse volumique (p) est inférieure à 120 kg/m$^3$.

2. Roue (1 ; 101 ; 201) selon la revendication 1, **caractérisée en ce que** ledit matériau constituant au moins en partie le carénage présente une déformation rémanente en compression à 25% (B) inférieure à 14%.

3. Roue (1 ; 101 ; 201) selon l'une des revendications 1 ou 2, **caractérisée en ce que** ledit matériau constitue au moins partiellement la surface externe dudit carénage.

4. Roue (1 ; 101 ; 201) selon l'une des revendications précédentes, **caractérisée en ce que** le module d'élasticité (E) du matériau est supérieur à 5 MPa.

5. Roue (1 ; 101 ; 201) selon l'une des revendications précédentes, **caractérisée en ce que** l'allongement à la rupture (A%) du matériau est supérieur à 10%.

6. Roue (1 ; 101 ; 201) selon l'une des revendications précédentes, **caractérisée en ce que** la résistance à la traction du matériau est supérieure à 500 kPa.

7. Roue (1 ; 101 ; 201) selon l'une des revendications précédentes, **caractérisée en ce que** la résistance à la compression à 25% du matériau est supérieure à 150 kPa.

8. Roue (1 ; 101 ; 201) selon l'une des revendications précédentes, **caractérisée en ce que** le matériau est une mousse de polypropylène expansé.

9. Roue (1 ; 101 ; 201) selon la revendication 8, **caractérisée en ce que** le polypropylène est de type copolymère polypropylène.

10. Roue (1 ; 101 ; 201) selon l'une des revendications précédentes, **caractérisée en ce qu'**en l'absence de contraintes mécaniques, le diamètre (d54) d'une surface externe (S54) du carénage (5 ; 105 ; 205), venant en contact avec un pont (34) de la jante (3) en configuration assemblée, est strictement supérieur au diamètre (d34) du pont (34), de préférence supérieur d'environ 1 mm.

11. Roue (101 ; 201) selon l'une des revendications précédentes, **caractérisée en ce que** le carénage (105) est constitué de deux parties (105a, 105b ; 205a, 205b) assemblées entre elles, réalisées au moins en partie à partir d'un matériau dont la masse volumique (p) est inférieure à 120 kg/m$^3$ et dont la déformation rémanente en compression à 25% (B) est inférieure à 14%.

12. Roue (201) selon la revendication 11, **caractérisée en ce que** la densité du matériau des deux parties (205a, 205b) de la roue (201) est différente.

13. Roue (1 ; 101 ; 201) selon l'une des revendications précédentes, **caractérisée en ce que** le carénage (5 ; 105 ; 205) comporte des évidements internes.

14. Roue (1 ; 101 ; 201) selon l'une des revendications précédentes, **caractérisée en ce que** le carénage (5 ; 105 ; 205) comporte des trous (5.1) de passage de rayons (4) de la roue (1 ; 101 ; 201), réalisés notamment par poinçonnage à chaud ou par perçage.

15. Roue (1 ; 101 ; 201) selon l'une des revendications précédentes, **caractérisée en ce que** le carénage (5 ; 105 ; 205) est amovible par déformation élastique.

16. Roue (1 ; 101 ; 201) selon l'une des revendications précédentes, **caractérisée en ce que** le carénage (52) comporte au moins un renfort structurel (52).

17. Procédé de fabrication d'une roue (1 ; 101 ; 201) selon l'une des revendications précédentes, **caractérisé en ce qu'**il comprend des étapes dans lesquelles :

a) on fabrique séparément la jante (3) et le carénage (5 ; 105 ; 205),

b) le carénage (5; 105; 205) est assemblé avec la jante (3) en le déformant élastiquement.

**Patentansprüche**

1. Rad (1 ; 101 ; 201) eines Fahrrads, welches mit Mitteln (32.1, 33.1) zur Aufnahme eines Reifens (6) versehen ist, wobei dieses Rad (1) mit einer auf der Felge aufgebrachten Verkleidung (5 ; 105 ; 205) ausgerüstet ist, **dadurch gekennzeichnet, dass** die Verkleidung (5 ; 105 ; 205) zumindest zum Teil ausgehend von einem Material hergestellt ist, dessen Volumenmasse (p) kleiner als 120 kg/m$^3$ ist.

2. Rad (1; 101; 201) nach Anspruch 1, **dadurch gekennzeichnet, dass** das Material, welches zumindest zum Teil die Verkleidung bildet, eine bleibende Verformung unter Druck bei 25% (B) von kleiner als 14% aufweist.

3. Rad (1; 101; 201) nach Anspruch 1 oder 2, **dadurch gekennzeichnet, dass** das Material zumindest teilweise die äußere Fläche der Verkleidung bildet.

4. Rad (1; 101; 201) nach einem der vorhergehenden Ansprüche, **dadurch gekennzeichnet, dass** der Elastizitätsmodul (E) des Materials größer als 5 MPa ist.

5. Rad (1; 101; 201) nach einem der vorhergehenden Ansprüche, **dadurch gekennzeichnet, dass** die Bruchdehnung (A%) des Materials größer als 10% ist.

6. Rad (1; 101; 201) nach einem der vorhergehenden Ansprüche, **dadurch gekennzeichnet, dass** die Zugfestigkeit des Materials größer als 500 kPa ist.

7. Rad (1; 101; 201) nach einem der vorhergehenden Ansprüche, **dadurch gekennzeichnet, dass** die Druckfestigkeit bei 25% des Materials größer als 150 kPa ist.

8. Rad (1; 101; 201) nach einem der vorhergehenden Ansprüche, **dadurch gekennzeichnet, dass** das Material ein Schaum aus expandiertem Polypropylen ist.

9. Rad (1; 101; 201) nach Anspruch 8, **dadurch gekennzeichnet, dass** das Polypropylen ein Kopolymer-Polypropylen ist.

10. Rad (1; 101; 201) nach einem der vorhergehenden Ansprüche, **dadurch gekennzeichnet, dass** bei nicht vorhandenen mechanischen Beanspruchungen der Durchmesser (d54) einer äußeren Fläche (S54) der Verkleidung (5; 105; 205), welche in zusammengebauter Konfiguration mit einer Brücke (34) der Felge (3) in Kontakt steht, unbedingt größer als der Durchmesser (d34) der Brücke (34), vorzugsweise um etwa 1 mm größer, ist.

11. Rad (101; 201) nach einem der vorhergehenden Ansprüche, **dadurch gekennzeichnet, dass** die Verkleidung (105) aus zwei miteinander zusammengesetzten Teilen (105a, 105b ; 205a, 205b) gebildet wird, welche zumindest zum Teil ausgehend von einem Material hergestellt ist, dessen Volumenmasse (p) kleiner als 120 kg/m$^3$ ist und dessen bleibende Verformung unter Druck bei 25% (B) kleiner als 14% ist.

12. Rad (201) nach Anspruch 11, **dadurch gekennzeichnet, dass** die Dichte des Materials der beiden Teile (205a, 205b) des Rades (201) verschieden ist.

13. Rad (1; 101; 201) nach einem der vorhergehenden Ansprüche, **dadurch gekennzeichnet, dass** die Verkleidung (5; 105; 205) innere Aussparungen aufweist.

14. Rad (1; 101; 201) nach einem der vorhergehenden Ansprüche, **dadurch gekennzeichnet, dass** die Verkleidung (5; 105; 205) Durchgangslöcher (5.1) für Speichen (4) des Rades (1; 101; 201) aufweist, welche insbesondere durch Wärmestanzen oder durch Bohren hergestellt sind.

15. Rad (1; 101; 201) nach einem der vorhergehenden Ansprüche, **dadurch gekennzeichnet, dass** die Verkleidung (5; 105; 205) durch elastische Verformung abnehmbar ist.

16. Rad (1; 101; 201) nach einem der vorhergehenden Ansprüche, **dadurch gekennzeichnet, dass** die Verkleidung (52) mindestens eine strukturelle Verstärkung (52) aufweist.

17. Verfahren zur Herstellung eines Rades (1; 101; 201) nach einem der vorhergehenden Ansprüche, **dadurch gekennzeichnet, dass** es Schritte aufweist, bei denen:

a) die Felge (3) und die Verkleidung (5; 105; 205) getrennt hergestellt werden,

b) die Verkleidung (5; 105; 205) mit der Felge (3) unter deren elastischer Verformung zusammengesetzt wird.

**Claims**

1. Bicycle wheel (1; 101; 201) provided with means (32.1, 33.1) for accepting a tyre (6), this wheel (1) being equipped with a fairing (5; 105; 205) attached to the rim (3), **characterized in that** the fairing (5; 105; 205) is made at least in part from a material of which the density (p) is less than 120 kg/m$^3$.

2. Wheel (1; 101; 201) according to Claim 1, **characterized in that** the said material of which the fairing is at least partially made has a permanent set in compression 25% (B) of less than 14%.

3. Wheel (1; 101; 201) according to one of Claims 1 and 2, **characterized in that** the said material at least partially constitutes the external surface of the said fairing.

4. Wheel (1; 101; 201) according to one of the preceding claims, **characterized in that** the elastic modulus (E) of the material is greater than 5 MPa.

5. Wheel (1; 101; 201) according to one of the preceding claims, **characterized in that** the elongation at break (A%) of the material is greater than 10%.

6. Wheel (1; 101; 201) according to one of the preceding claims, **characterized in that** the tensile strength of the material is greater than 500 kPa.

7. Wheel (1; 101; 201) according to one of the preceding claims, **characterized in that** the compressive strength of the material at 25% compression is greater than 150 kPa.

8. Wheel (1; 101; 201) according to one of the preceding claims, **characterized in that** the material is an expanded polypropylene foam.

9. Wheel (1; 101; 201) according to Claim 8, **characterized in that** the polypropylene is of the polypropylene copolymer type.

10. Wheel (1; 101; 201) according to one of the preceding claims, **characterized in that** in the absence of mechanical stress, the diameter (d54) of an external surface (S54) of the fairing (5; 105; 205) that comes into contact with a bridge (34) of the rim (3) in the assembled configuration, is strictly greater than the diameter (d34) of the bridge (34), preferably around 1 mm greater.

11. Wheel (101; 201) according to one of the preceding claims, **characterized in that** the fairing (105) is made up of two parts (105a, 105b; 205a, 205b) joined together, produced at least in part from a material of which the density (p) is less than 120 kg/m$^3$ and of which the permanent set in compression at 25% (B) is less than 14%.

12. Wheel (201) according to Claim 11, **characterized in that** the density of the material of the two parts (205a, 205b) of the wheel (201) is different.

13. Wheel (1; 101; 201) according to one of the preceding claims, **characterized in that** the fairing (5; 105; 205) has internal recesses.

14. Wheel (1; 101; 201) according to one of the preceding claims, **characterized in that** the fairing (5; 105; 205) has holes (5.1) for the passage of spokes (4) of the wheel (1; 101; 201), these holes notably being created by hot stamping or by drilling.

15. Wheel (1; 101; 201) according to one of the preceding claims, **characterized in that** the fairing (5; 105; 205) is removable using elastic deformation.

16. Wheel (1; 101; 201) according to one of the preceding claims, **characterized in that** the fairing (52) comprises at least one structural reinforcement (52).

17. Method of manufacturing a wheel (1; 101; 201) according to one of the preceding claims, **characterized in that** it comprises steps in which:

   a) the rim (3) and the fairing (5; 105; 205) are manufactured separately,
   b) the fairing (5; 105; 205) is assembled with the rim (3) by elastically deforming this fairing.

FIG.1

FIG.2

FIG.3

## FIG.5

## FIG.4

FIG.6

FIG.7

## FIG.8

| A | P (Kg/m³) | E (MPa) | A% | ISO 1798 (kPa) | ISO 844 (25%) (kPa) | B (25%) |
|---|---|---|---|---|---|---|
| Invention | < 120 | > 5 | > 10% | > 500 | > 150 | < 14% |
| ARPRO 60 | 60 | 7,55 | 17% | 760 | 340 | 11,5% |
| ARPRO 80 | 80 | 13,7 | 15% | 960 | 500 | 11,5% |
| ARPRO 100 | 100 | 18,5 | 13% | 1150 | 700 | 11,5% |

## FIG.10

FIG.9

FIG.11

**EP 2 774 777 B1**

## RÉFÉRENCES CITÉES DANS LA DESCRIPTION

**Documents brevets cités dans la description**

- FR 2952587
- FR 2344411 A
- FR 2702707 A